# EUROPEAN PATENT APPLICATION

(11) **EP 4 160 945 A1**
(43) Date of publication of application: **05.04.2023**
(21) Application number: 21200362.8
(22) Date of filing: 30.09.2021
(51) Int. Cl.: H04B 13/00, E21B 47/00

(54) **SYSTEM AND METHOD FOR COMMUNICATING THROUGH A CHANNEL STRUCTURE**

(30) Priority: 29.09.2021 PT 2021117486
(71) Applicant: INESC TEC - Inst. Eng. de Systemas E Computadores Tecnologia E Ciência, 4200-465 Porto (PT)
(72) Inventor: Guedes Pereira dos Santos, Hugo Miguel, 4200-465 Porto (PT); Sousa Pessoa, Luis Manuel de, 4200-465 Porto (PT); Borges Teixeira, Filipe, 4200-465 Porto (PT); Gonzalez Gonzalez, David, 60488 Frankfurt (DE); Andrae, Andreas, 60488 Frankfurt (DE); Gonsa, Osvaldo, 60488 Frankfurt (DE); Lopes Campos, Rui, 4200-465 Porto (PT); Pinto de Oliveira, Tiago Telmo, 4200-465 Porto (PT)
(74) Representative: do Nascimento Gomes, Rui

(57) **Abstract**

The present invention relates to a new communication system allowing to communicate through a channel structure formed by at least one channel segment, making use of communication nodes deployed along said channel. These communication nodes will form a network to broadcast data through the channel structure by magnetically inducing an element susceptible to magnetic induction arranged along at least a part of the channel segment, in order to convey data based on the principle of magnetic induction. The present invention also relates to a communication method using the same principle. The proposed communication system is developed in order to have null or minimal impact on the channel design and manufacturing process, being easy to attach to the channel segments of the channel structure.

## Description

### FIELD OF THE INVENTION

The present invention is enclosed in the field of communication systems suitable for harsh conditions.

### PRIOR ART

A communication network includes analysis, design, implementation and use of local, wide-area or mobile networks that link several nodes together. A network may then be defined as a set of nodes that are connected together via a wireless or cabled propagation medium, for the purpose of communicating with each other, enabling a wide variety of applications in the fields of communication and monitorization, among others.

Industrial environments and environments with harsh elements conditions pose a difficult challenge for communications, for instance - among other reasons - because wireless signals may have a reduced range or are susceptible to interference, or because elements may cause damage to devices such as cables.

In addition, considering a particular example in the oil and gas industry, several processes require the transportation of fluids, such as oil and seawater. The transportation of these fluids is typically made using a hose system, particularly but not exclusively in underwater environments. For instance, the transfer of crude oil from offshore tankers to onshore refineries is made using a hose system deployed underwater. These underwater hose systems are usually subject to adverse conditions due to the harsh ocean environment, and although they are built to last 20-25 years under such conditions, the hoses lifetime gets severely affected, and the typical lifetime is between 3 and 7 years. Wear can induce phenomena such as fluid leaks, therefore, along the operation of the hoses, it is important to frequently monitor their condition in order to, for example, anticipate maintenance procedures and keep track of the alignment of the hose segments. The periodic monitoring of the hose condition is typically performed by divers. However, human-based monitoring, besides its inherent costs, cannot be done neither as frequent as needed nor as soon as necessary. Indeed, divers take time to reach the place where the hoses are deployed and can only work if the sea conditions are safe enough. The ability to perform remote monitoring, such as monitoring a hose system adapted to carry fluids, making use of a network of sensor nodes deployed on said hose and capable of communicating wirelessly, is already documented in the state of the art. The systems already known for that purpose are described in the next paragraphs and generically they are based on three communication techniques such as those involving electromagnetic waves, acoustic waves and magnetic induction.

Document US8437224 provides an environmental monitoring system which consists of an underwater measurement device, a transmitter and a receiver, for transmitting/receiving data and controls between the measurement device underwater and the control site. It uses low frequency electromagnetic signals and magnetically coupled antennas in the transmitter and receiver. The monitoring system also includes a processor to assess parameters measured by the measuring device in relation to predetermined threshold levels. It also considers the existence of an intermediate relaying station.

In document US8305227 it is disclosed a point-to-point wireless auxiliary system for monitoring and control of an underwater installation, allowing to send data and control signals between the underwater installation and an associated riser assembly. The data is collected by the sensor network and is transmitted, by electromagnetic signals, from a first transceiver, powered by a local power supply, to a second transceiver, attached to a riser assembly. To save energy, the first transceiver is designed to become active for a short time and then to switch to an inactive mode.

All the existing solutions which seek to provide a robust means for communication in several harsh environments are mainly focus on point-to-point short-range electromagnetic and/or magnetic communications, and they represent quite complex architectures, requiring their own communication structure that needs to be installed, which represents a huge disadvantage considering adverse conditions where a communication system may be implemented, for example due to the harsh ocean environment. In connection with this, despite some of the solutions consider the existence of relay nodes, they have the issue of disregarding network topology aspects related with the communication system that allows to achieve a dynamic network in terms of network autoconfiguration, redundancy and resilience, which is of a great impact in system application scenarios with adverse conditions.

The present solution innovatively overcomes such issues.

### SUMMARY OF THE INVENTION

A first aspect of the present invention relates to a communication system through a channel, which was developed with the purpose of having null or minimal impact on the channel design and manufacturing process. The channel is comprised by at least one channel structure, and the at least one channel structure comprises at least one channel segment having an element susceptible to magnetic induction arranged along at least a part of the channel segment. The communication system comprises a plurality of spaced apart communication nodes deployable along each channel segment, wherein each communication node is configured to generate and/or transmit data, namely from sensors embedded on the channel structure or from other external sources through a standard communications interface (SCI). More particularly, each communication node comprises a communication module configured to magnetically induce the element susceptible to magnetic induction, such that at least one signal is able to be provided in said element, thereby conveying data to at least one other communication node using said element susceptible to magnetic induction arranged in between each communication node and at least one other communication node as signal propagation medium. The communication system now proposed makes it possible to take advantage of the physical characteristics of the channel in which it is applied, in particular the use of the element susceptible to magnetic induction arranged along at least a part of a channel segment, to convey data based on the principle of magnetic induction. In this way, the system installation step only requires the deployment of communication nodes along the channel. This is particularly relevant when large segments of channel are considered, which, in turn, demands a large set of communication nodes.

In a second aspect of the present invention, it is presented a channel system comprised by at least one channel structure and formed by a plurality of interconnected channel segments wherein each channel segment has an element susceptible to magnetic induction arranged along at least a part of the segment. The channel system comprises the communication system previously described.

A third aspect of the invention relates to the use of a communication node for communicating through a channel, the channel being comprised by at least one channel structure comprising at least one channel segment having an element susceptible to magnetic induction arranged along at least a part of the channel segment. The said communication node comprises a communication module configured to magnetically induce the element susceptible to magnetic induction, such that a at least one signal is able to be provided in said element, thereby conveying data through such signal to at least one other communication node using said element susceptible to magnetic induction arranged in between each communication node and at least one other communication node as signal propagation medium. In this way, it is possible to take advantage of the physical characteristics of the channel, in particular the fact that it includes an element susceptible to magnetic induction, to generate a signal for conveying data to at least one other communication node using said element susceptible to magnetic induction arranged in between communication nodes. Optionally, the at least one channel structure is adapted to carry fluids from one location to another location, and/or the at least a portion of the at least one channel structure is deployed underwater, in the air or in terrain.

A fourth aspect of the invention relates to the use of the communication system previously described, wherein the system is used for communicating through a channel, the channel being comprised by at least one channel structure comprising at least one channel segment having an element susceptible to magnetic induction arranged along at least a part of the channel segment. Optionally, the at least one channel structure is adapted to carry fluids from one location to another location, and/or at least a portion of the at least one channel structure is deployed underwater, in the air or in terrain.

In a fifth aspect of the invention, it is presented a communication method through a channel, the channel comprising at least one channel structure comprising at least one channel segment having an element susceptible to magnetic induction arranged along at least a part of the channel segment. The method comprises the step of executing a magnetic induction action by a communication node, in order to magnetically induce the element susceptible to magnetic induction, such that at least one signal is able to be provided in said element, thereby conveying data through such signal to at least one other communication node using said element susceptible to magnetic induction arranged in between each communication node and at least one other communication node as signal propagation medium.

A sixth aspect of the invention relates to a method for implementing a linear topology multi-hop network using the communication system previously described. The proposed network topology aspects related with the communication system that allows to achieve a dynamic network in terms of network autoconfiguration, redundancy and resilience, which is of a great impact in system application scenarios with adverse conditions. It includes mechanisms to tolerate link or node failures without compromising the whole network, providing a resilient communications solution. The method comprises the steps of:
i. central unit transmits a bootstrap message to a first communication node deployed on a channel structure's end channel segment of the channel system to be monitored;
ii. said first communication node broadcasts the bootstrap message containing the rank 0 to at least one neighbouring communication node;
iii. upon receiving the bootstrap message from a neighbouring communication node, a communication node increments the rank contained in the bootstrap message in 1 and rebroadcasts the bootstrap message to at least one neighbouring communication node;
iv. Step iii. is repeated until the bootstrap message reached the last communication node of the network;
v. The last communication node transmits a bootstrap complete message to the central unit;
vi. Based on the bootstrap complete message containing information about all the communication nodes of the network and their rank in the linear topology, the central unit computes a duty cycle message that is broadcasted in the network, switching all the communication nodes to a Power Save state for a predefined sleeping time;
vii. Once the sleeping time ends, each communication node switches to an Active State to broadcast a data packet in the linear network towards the central unit.

### DESCRIPTION OF FIGURES

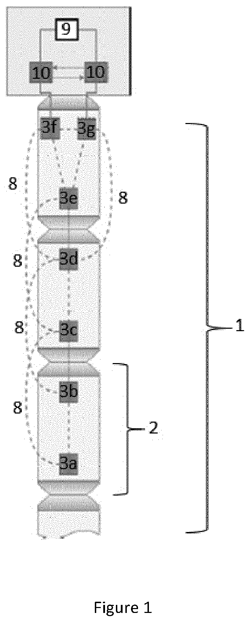

Figure 1 - representation of an embodiment of the communication system of the invention or of the channel system comprising the communication system of the invention, wherein the reference signs represent:
   1 - channel structure;
   2 - channel segment;
   3a ... 3g - communication nodes;
   8 - data links;
   9 - central unit;
   10 - sink node.
Figure 2 - representation of another embodiment of the communication system of the invention or of the channel system comprising the communication system of the invention, wherein the reference signs represent:
   1 - channel structure;
   2 - channel segment;
   3a ... 3g - communication nodes;
   4 - element susceptible to magnetic induction;
   5 - parasitic conductive elements;
   6 - flange;
   11 - twisted pair connection.

### DETAILED DESCRIPTION

The more general and advantageous configurations of the present invention are described in the Summary of the invention. Such configurations are detailed below in accordance with other advantageous and/or preferred embodiments of implementation of the present invention.

A new communication system is disclosed allowing to communicate through a channel structure, making use of communication nodes deployed along said channel. These communication nodes will form a network to broadcast data through the channel. The proposed communication system is developed in order to have null or minimal impact on the channel design and manufacturing process, being easy to attach to the channel segments of the channel structure. This is particularly relevant when large segments are considered, which, in turn, demands a large set of communication nodes. The system now developed includes mechanisms to tolerate link or node failures without compromising the whole network, providing a resilient communications solution. Link or node failures may occur, for instance, due to a physical impact on the channel, a hardware malfunction, battery depletion or marine fouling in case of channel being deployed underwater.

In an alternative aspect of the communication system of the invention, the communication module of the communication nodes is configured to magnetically induce the element susceptible to magnetic induction, such that a communication protocol is able to be provided in said element, thereby conveying data to at least one other communication node. In this way, it is possible to transmit data according to a predefined set of rules, that may be related with the syntax, semantics and synchronization of the communication, depending on the system or energy consumption requirements.

In a preferred embodiment of the communication system of the invention, the at least one communication node, optionally a plurality of communication nodes, is configured to measure at least one channel segment parameter in order to generate monitoring data, said monitoring data optionally being conveyed to at least one other communication node. More particularly, a channel segment parameter may relate to multiple phenomena applied to a channel, including forces imposed on the channel segment, fluid leakage, misalignments, marine growth, flow and temperature.

In an alternative embodiment of the communication system of the invention, it may further comprise a plurality of sub-monitoring nodes deployable on a channel segment. Each sub-monitoring node is connected to a communication node deployable on said channel segment and comprising sensor means adapted to measure at least one channel segment parameter, generating additional monitoring data to be transmitted to the communication node to which it is connected.

In an alternative embodiment of the communication system of the invention, the monitoring operation using the communication system of the invention may be done periodically, although it can also happen on-demand when requested by a central unit, allowing in any case more frequent measurements of a channel system's conditions or in response to an incident. The ability to 1) change the frequency of data retrieval from communication nodes, either by the central unit or because a given threshold was exceeded; or 2) requesting data from a specific communication node, deployed on a specific part of the channel, or a set of communication nodes, represents an advantage of the communication system now proposed.

In an alternative embodiment of the communication system of the invention, at least two communication nodes are deployable in each channel segment; a first communication node is attachable to a first location on a channel segment; and a second communication node is attachable to a second location on the channel segment. In one embodiment, the first location is on a first extremity of the channel segment, and the second location is on a second extremity of the channel segment, opposite to the first extremity.

In a preferred embodiment of the communication system of the invention, the at least one channel structure is comprised by at least two channel segments, and the connection between two adjacent channel segments is performed by means of a flange element. According to these particular characteristics of the channel, the system further comprises at least one pair of parasitic conductive elements formed by a first parasitic conductive element and by a second parasitic conductive element, both elements being connected to each other by means of a data communication medium.

More particularly, in one embodiment of the communication system of the invention, the first parasitic conductive element is arranged at an end of a first channel segment connecting one side of a flange element, and the second parasitic conductive element is arranged at an end of a second channel segment connecting the opposite side of the flange element.

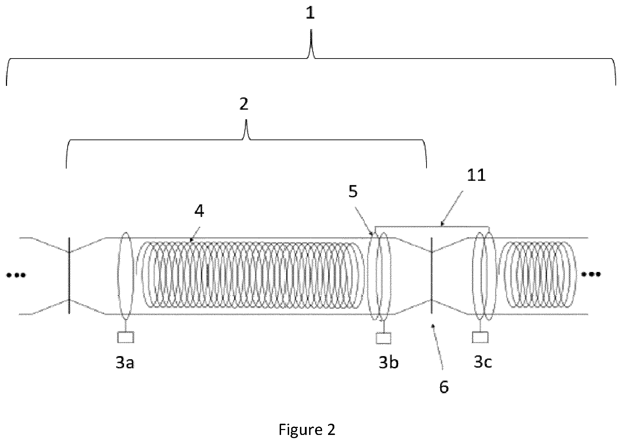

Yet in another embodiment of the communication system of the invention, the parasitic conductive elements are placed in the vicinity of communication nodes in order to be magnetically induced by said communication nodes through the so called driven loops, so that to enable the transmission of data across the flange, between two adjacent channel segments, by means of the data communication medium established between parasitic conductive elements of a pair of parasitic conductive elements. Optionally, the communication medium is a wired or wireless medium and, optionally, it is configured to communicate over an optical based communication protocol, a copper based communication protocol or a wireless communication protocol. In this way, the transmission of signals across the flange is enabled by the usage of induction loops placed near the end points of each channel segment. In fact, two loops (the first and second parasitic conductive elements) are necessary near each end point, one driven loop, and one parasitic loop, as schematically represented in Figure 2. Driven loops are connected to the communication nodes and enable communications between the nodes placed in the end points of the same channel segment, via magnetic coupling through the channel's element susceptible of magnetic induction. Parasitic loops are used to enable communications between the communication nodes across the flange (consecutive nodes from adjacent channel segments), achieved by means of a data communication medium between two parasitic loops in adjacent hose segments. Alternatively, the first and second parasitic conductive elements may be connected through a wired connection, using a twisted pair. This is particularly relevant since the transmission of signals across the flange of two adjacent channel segments may be subject to an intolerable channel attenuation (of around 172 dB for an underwater scenario). Therefore, a wired connection between the two parasitic loops enables overcoming the huge signal attenuation that would be incurred by simply transmitting the signal via magnetic induction across the flange. Besides that, the proposed configuration for the communication system using parasitic conductive elements, enables the communications link between non-adjacent communication nodes (e.g., between nodes 3a and 3c, Figure 2), where the middle node (node 3b, Figure 2) acts as a completely passive signal repeater, which is agnostic to the signal transmission direction, and therefore a failure of the middle node is tolerated.

In a preferred embodiment of the communication system of the invention, it further comprises a central unit comprising processing means adapted to process data transmitted by communication nodes, and to transmit control commands to communication nodes.

Yet in another embodiment of the communication system of the invention, the central unit comprises a sink module adapted to collect data from communication nodes deployable on an end channel segment and to transmit said data to the central unit. The sink module comprises at least two sink nodes and the communication nodes deployable on the end channel segment are configured to transmit data to the at least two sink nodes. The control commands transmitted by the central unit to the communication nodes may relate to at least one of the following operational parameters: data transmission frequency; communication node's duty cycle; on-demand querying of communication nodes. Additionally, the control commands may also relate to threshold levels of channel segment parameters, which is relevant for the purpose of monitoring channel segments' condition.

The present invention also relates to a channel system comprising the communication system previously described. Said channel system is comprised by at least one channel structure, the at least one channel structure comprising at least one channel segment having an element susceptible to magnetic induction arranged along at least a part of the channel segment.

In a preferred embodiment of the channel system of the invention, each element susceptible to magnetic induction arranged along at least a part of the channel segment comprises a winding susceptible to magnetic induction, each communication node thereby being further configured to convey data through at least one signal provided in said element susceptible to magnetic induction (also known as magnetic field coupling or inductive coupling), optionally by resonant magnetic coupling, optionally by capacitive coupling. The said signal should be provided preferably by a carrier frequency modulation (with the carrier frequency possibly ranging from 10 Hz to 10 GHz), and optionally a baseband modulation. The said carrier frequency being optionally chosen at the self-resonant frequency of the said element susceptible to magnetic induction. In one alternative embodiment of the channel system of the present invention, the winding consisting of at least one helix, optionally the winding comprising, optionally consisting of steel.

In a preferred embodiment of the channel system of the invention, the at least one channel structure has a substantially cylindrical shape, optionally the channel structure comprising or consisting of a hose, each communication node thereby being further configured to convey data through at least one signal provided in said element susceptible to magnetic induction. Since the system is able to make use of the physical characteristics of the channel, it has null or minimal impact on the hose design and manufacturing process, being easy to deploy along the segments of the hose without requiring any modifications in the structure of the hose. This is particularly relevant when large segments are considered, which, in turn, demands a large set of communication nodes.

The present invention also relates to a communication method through a channel, the channel comprising at least one channel structure comprising at least one channel segment having an element susceptible to magnetic induction arranged along at least a part of the channel segment.

In a preferred embodiment of the communication method of invention, the at least one channel structure is adapted to carry fluids from one location to another location, and/or at least a portion of the at least one channel structure is deployed underwater, in the air or in terrain. The communication method now proposed makes it possible to take advantage of the physical characteristics of the channel in which it is applied, in particular the element susceptible to magnetic induction arranged along at least a part of a channel segment, to implement a communication protocol based on the principle of magnetic induction.

In a preferred embodiment of the communication method of the present invention, it further comprises the step of measuring at least one channel segment parameter in a communication node in order to generate monitoring data. Said monitoring data being conveyed between communication nodes is monitoring data.

In a preferred embodiment of the communication method of the present invention, it is implemented by the communication system already described.

The present invention also relates to a method for implementing a linear topology multi-hop network using the communication system previously described.

In a preferred embodiment of the method of the invention, the duty cycle message carries an implicit confirmation requiring that a communication node receives a neighbour rebroadcast from at least one upper ranked neighbour. Additionally, upon receiving said neighbour rebroadcast, the communication node switches to the Power Save state. In another step of the method, the duty cycle message is resent by a communication node to at least one neighbour, until a number of attempts n, if within a predefined period of time a neighbour rebroadcast is not received by the communication node from at least one neighbour. The number of attempts n is configurable and depends on the bit error ratio of the communication channel. If the number n of attempts is reached, the communication node switches to Power Save state and will switch to Active state according to the duty cycle message received from the central unit.

In a preferred embodiment of the method of the invention, step vii. of the method is initiated by the last communication node of the network, broadcasting a data packet, at a time defined by the duty cycle message. Upon receiving a data packet from an upper ranked neighbour, that aggregates data generated by all upper ranked nodes, a communication node generates a new data packet by aggregating its own data and rebroadcasts the generated data packet to at least one of its lower ranked neighbours. The rebroadcast continues until a data packet, aggregating data from all communication nodes of the network, reaches the central unit. Optionally, the data packet is broadcasted by a communication node to at least two neighbours communication nodes, both in the upward (towards the sink node) and downward (towards the last node) direction. The last node of the network is considered to be a communication node with just two neighbours. The proposed network topology allows to achieve a dynamic network in terms of network autoconfiguration, redundancy and resilience, which is of a great impact in system application scenarios with adverse conditions.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition of all such combinations.

## Claims

1. A communication system through a channel, the channel being comprised by at least one channel structure; the at least one channel structure comprising at least one channel segment having an element susceptible to magnetic induction arranged along at least a part of the channel segment; the system comprising:
- a plurality of spaced apart communication nodes deployable along each channel segment; each communication node being configured to generate and/or transmit data;
wherein,
each communication node comprises a communication module configured to magnetically induce the element susceptible to magnetic induction, such that at least one signal is able to be provided in said element, thereby conveying data through such signal to at least one other communication node using said element susceptible to magnetic induction arranged in between each communication node and at least one other communication node as signal propagation medium.

2. A communication system according to claim 1, wherein at least one communication node, optionally a plurality of communication nodes, is configured to measure at least one channel segment parameter in order to generate monitoring data, said monitoring data optionally being conveyed to at least one other communication node.

3. A communication system according to claim 2, wherein a channel segment parameter relates to one of the following parameters: force applied to the channel segment, fluid leakage, marine growth, flow and temperature.

4. A communication system according to any of the previous claims, wherein the at least one channel structure is comprised by at least two channel segments; the connection between two adjacent channel segments being performable by means of a flange element; the system further comprising:
at least one pair of parasitic conductive elements formed by a first parasitic conductive element and by a second parasitic conductive element, both elements being connectable to each other by means of a data communication medium; and, optionally, wherein the first parasitic conductive element is able to be arranged at an end of a first channel segment connectable to one side of a flange element, and the second parasitic conductive element is able to be arranged at an end of a second channel segment connectable to the opposite side of the flange element; and wherein
optionally, the parasitic conductive elements being configured such that, when in the vicinity of communication nodes, are magnetically induced by said communication nodes thereby enabling transmission of data across the flange, between two adjacent channel segments, by means of the data communication medium established between parasitic conductive elements of a pair of parasitic conductive elements; and wherein
optionally, the communication medium is a wired or wireless medium and, optionally, it is configured to communicate over an optical based communication protocol, a copper based communication protocol or a wireless communication protocol.

5. A communication system according to any of the previous claims, further comprising a central unit; the central unit comprising processing means adapted to process data transmitted by communication nodes, and to transmit control commands to communication nodes; and, optionally,
the central unit comprises a sink module adapted to collect data from communication nodes deployable on an end channel segment and to transmit said data to the central unit; the sink module comprises at least two sink nodes, wherein
communication nodes deployable on the end channel segment are configured to transmit data to the at least two sink nodes; and optionally,
the control commands transmitted by the central unit to the communication nodes are related with at least one of the following operational parameters: data transmission frequency; communication node's duty cycle; on-demand querying of communication nodes.

6. A channel system comprised by at least one channel structure; the at least one channel structure comprising at least one channel segment having an element susceptible to magnetic induction arranged along at least a part of the channel segment; the channel system comprising the communication system of claims 1 to 5.

7. The channel system according to claim 6, wherein each element susceptible to magnetic induction arranged along at least a part of the channel segment comprises a winding susceptible to magnetic induction, each communication node thereby being further configured to convey data through at least one signal provided in said element susceptible to magnetic induction, optionally the winding consisting of at least one helix, optionally the winding comprising, optionally consisting of steel, optionally carbon steel.

8. The channel system according to claims 6 or 7, wherein the at least one channel structure has a substantially cylindrical shape, optionally the channel structure comprising or consisting of a hose, each communication node thereby being further configured to convey data through at least one signal provided in said element susceptible to magnetic induction.

9. Use of a communication node for communicating through a channel, the channel being comprised by at least one channel structure; the at least one channel structure comprising at least one channel segment having an element susceptible to magnetic induction arranged along at least a part of the channel segment, wherein the communication node comprises a communication module configured to magnetically induce the element susceptible to magnetic induction, such that a communication protocol is able to be provided in said element, thereby conveying data to at least one other communication node using said element susceptible to magnetic induction arranged in between each communication node and at least one other communication node as signal propagation medium,
wherein, optionally, the at least one channel structure is adapted to carry fluids from one location to another location; and/or
at least a portion of the at least one channel structure is deployed underwater, in the air or in terrain.

10. Use of the communication system of any of the claims 1-5, wherein the system is used for for communicating through a channel, the channel being comprised by at least one channel structure; the at least one channel structure comprising at least one channel segment having an element susceptible to magnetic induction arranged along at least a part of the channel segment;
wherein, optionally, the at least one channel structure is adapted to carry fluids from one location to another location; and/or
at least a portion of the at least one channel structure is deployed underwater, in the air or in terrain.

11. A communication method through a channel, the channel comprising at least one channel structure; the at least one channel structure comprising at least one channel segment having an element susceptible to magnetic induction arranged along at least a part of the channel segment; the method comprising the step of:
- a magnetic induction action is executed by a communication node in order to magnetically induce the element susceptible to magnetic induction, such that at least one signal is able to be provided in said element, thereby conveying data through such signal to at least one other communication node using said element susceptible to magnetic induction arranged in between each communication node and at least one other communication node as signal propagation medium;
wherein, optionally, the at least one channel structure is adapted to carry fluids from one location to another location; and at least a portion of the at least one channel structure is deployed underwater, in space or in terrain; and, optionally,
the method additionally comprising the step of:
- measuring at least one channel segment parameter in a communication node in order to generate monitoring data;
wherein, the data conveyed between communication nodes is monitoring data.

12. The method according to claim 11, wherein it is implemented by the communication system of any of the claims 1 to 5; or
wherein the method is implemented by the channel system of any of the claims 6 to 8.

13. Method for implementing a linear topology multi-hop network using the communication system of claims 1 to 5; the method comprising the steps of:
i. central unit transmits a bootstrap message to a first communication node deployed on a channel structure's end channel segment of the channel system to be monitored;
ii. said first communication node broadcasts the bootstrap message containing the rank 0 to at least one neighbouring communication node;
iii. upon receiving the bootstrap message from a neighbouring communication node, a communication node increments the rank contained in the bootstrap message in 1 and rebroadcasts the bootstrap message to at least one neighbouring communication node;
iv. Step iii. is repeated until the bootstrap message reached the last communication node of the network;
v. The last communication node transmits a bootstrap complete message to the central unit;
vi. Based on the bootstrap complete message containing information about all the communication nodes of the network and their rank in the linear topology, the central unit computes a duty cycle message that is broadcasted in the network, switching all the communication nodes to a Power Save state for a predefined sleeping time;
vii. Once the sleeping time ends, each communication node switches to an Active State to broadcast a data packet in the linear network towards the central unit.

14. Method according to claim 13 wherein the duty cycle message carries an implicit confirmation requiring that a communication node receives a neighbour rebroadcast from at least one upper ranked neighbour;
and wherein
upon receiving said neighbour rebroadcast, the communication node switches to the Power Save state; and wherein,
the duty cycle message is resent by a communication node to at least one neighbour, until a number of attempts n, if within a predefined period of time a neighbour rebroadcast is not received by the communication node from at least one neighbour; and wherein,
the number of attempts n is configurable and depends on the bit error ratio of the communication channel;
and wherein,
if the number n of attempts is reached, the communication node switches to Power Save state and will switch to Active state according to the duty cycle message received from the central unit.

15. Method according to claims 13 or 14, wherein step vii. is initiated by the last communication node of the network, broadcasting a data packet, at a time defined by the duty cycle message;
and wherein,
upon receiving a data packet from an upper ranked neighbour, that aggregates data generated by all upper ranked nodes, a communication node generates a new data packet by aggregating its own data and rebroadcasts the generated data packet to at least one of its lower ranked neighbours;
the rebroadcast continues until a data packet, aggregating data from all communication nodes of the network, reaches the central unit and,
optionally,
wherein the data packet is broadcasted by a communication node to at least two neighbours communication nodes, both in the upward (towards the sink node) and downward (towards the last node) direction; and wherein, the last node of the network is considered to be a communication node with just two neighbours.
